# EUROPEAN PATENT APPLICATION

(11) **EP 2 187 248 A1**
(43) Date of publication of application: **19.05.2010**
(21) Application number: 09176220.3
(22) Date of filing: 17.11.2009
(51) Int. Cl.: G02B 6/00, G02F 1/13357

(54) **Backlight unit and liquid crystal display and TV device having the same**

(30) Priority: 18.11.2008 KR 20080114625; 11.11.2009 KR 20090108727
(71) Applicant: Samsung Electronics Co., Ltd., Suwon-si Gyeonggi-do 443-742 (KR)
(72) Inventor: Kang, Boing-jo, Gyeonggi-do (KR); Jang, Kyoung-choul, Gyeonggi-do (KR); Lee, Won-yong, Gyeonggi-do (KR); Kim, Sang-ik, Gyeonggi-do (KR)
(74) Representative: D'Halleweyn, Nele Veerle Trees Gertrudis

(57) **Abstract**

A backlight unit includes a plurality of light emitting diodes (LEDs) which emit light, a first metal substrate on which the plurality of LEDs are mounted, a second metal substrate which is connected to the first metal substrate, a light guide plate which guides the light emitted from the plurality of LEDs toward a liquid crystal panel, and a frame which accommodates the light guide plate and the first and the second metal substrates, wherein the first and the second metal substrates are a heat sink that absorbs heat generated by the plurality of LEDs.

## Description

### Field of the Invention

Apparatuses and methods consistent with the present invention relate to a liquid crystal display and a television device, and more particularly, to a backlight unit used in a liquid crystal display and a television device.

### Description of the Related Art

Liquid crystal displays are a kind of display apparatus that has been widely used for its light weight, compact size, and capability of realizing full-color and high resolution. The liquid crystal display displays images using a liquid crystal which is a light receiving element incapable of emitting light by itself. Therefore, a backlight unit is required to supply light to a liquid crystal panel.

Lamps are mainly used as a light source for the backlight unit. Recently, for the purpose of achieving compactness of the liquid crystal display, an attempt has been made to apply a light emitting diode (LED) to the backlight unit. Since a single liquid crystal display requires many LEDs, an LED module having a plurality of LEDs is preferred. With the application of the LEDs to the backlight unit, components necessary for the lamp such as an inverter are not required and noise by high voltage can be reduced.

The LED emits a large amount of heat if the liquid crystal display is used for a long time. The high temperature reduces a lifespan of the LED and causes the LED to be defective. Therefore, a heat dissipating device is required to dissipate heat generated in the LED. However, due to such an extra heat dissipating device, the number of manufacturing processes increases and a manufacturing cost increases.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a backlight unit, which simplifies a manufacturing process and effectively cools an LED, and a liquid crystal display and a television device having the same.

According to an aspect of the present invention, a backlight unit includes a plurality of light emitting diodes (LEDs) which emit light, a first metal substrate on which the plurality of LEDs are mounted, a second metal substrate which is connected to the first metal substrate, a light guide plate which guides the light emitted from the plurality of LEDs toward a liquid crystal panel, and a frame which accommodates the light guide plate and the first and the second metal substrates, and the first and the second metal substrates are a heat sink that absorbs heat generated by the plurality of LEDs.

Each of the first and the second metal substrates may be formed in a bar shape, the first and the second metal substrates may have an entire thickness larger than a width of the LEDs, and the heat generated by the LEDs may be conducted to the frame through the first and the second metal substrates.

The first and the second metal substrate may be integrally formed with each other.

The first and the second metal substrates may be connected to each other by soldering.

The first and the second metal substrates may be connected to each other by a screw.

The second metal substrate may include a fixing part to be fixed to the frame.

The fixing part may be a through hole which is provided on a surface perpendicular to a surface of the first metal substrate on which the LEDs are mounted.

The fixing part may be a through hole which is formed on a surface opposite a surface of the first metal substrate on which the LEDs are mounted.

The second metal substrate may be disposed on a side surface of the frame, and the second metal substrate may have one surface having a shape corresponding to the side surface of the frame such that one surface of the second metal substrate is in surface contact with the side surface of the frame and the second metal substrate is fixed to the frame.

The backlight unit may further include at least one connector which is disposed on the first metal substrate to supply power to the plurality of LEDs.

Two or more connectors may be disposed in the first metal substrate and the plurality of LEDs may be allocated to the two or more connectors.

According to another aspect of the present invention, a liquid crystal display includes a liquid crystal panel which displays an image, and a backlight unit which supplies light to the liquid crystal panel and has the feature described above.

According to still another aspect of the present invention, a television device includes a signal receiver which receives an external signal, a signal processor which processes the external signal received by the signal receiver to generate an image signal, a liquid crystal panel which receives the image signal from the signal processor and displays an image, and a backlight unit which supplies light to the liquid crystal panel and the feature described above.

Additional and/or other aspects and advantages of the invention will be set forth in part in the description which follows and, in part, will be obvious from the description, or may be learned by practice of the invention.

### BRIEF DESCRIPTION OF THE DRAWING FIGURES

The above and/or other aspects of the present invention will be more apparent by describing certain exemplary embodiments of the present invention with reference to the accompanying drawings, in which:
FIG. 1 is an exploded perspective view of a liquid crystal display consistent with an exemplary embodiment of the present invention;
FIG. 2 is an enlarged view of the LED module of FIG. 1;
FIG. 3 is a view of an LED module consistent with another exemplary embodiment of the present invention; and
FIG. 4 is a block diagram illustrating a television device consistent with an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

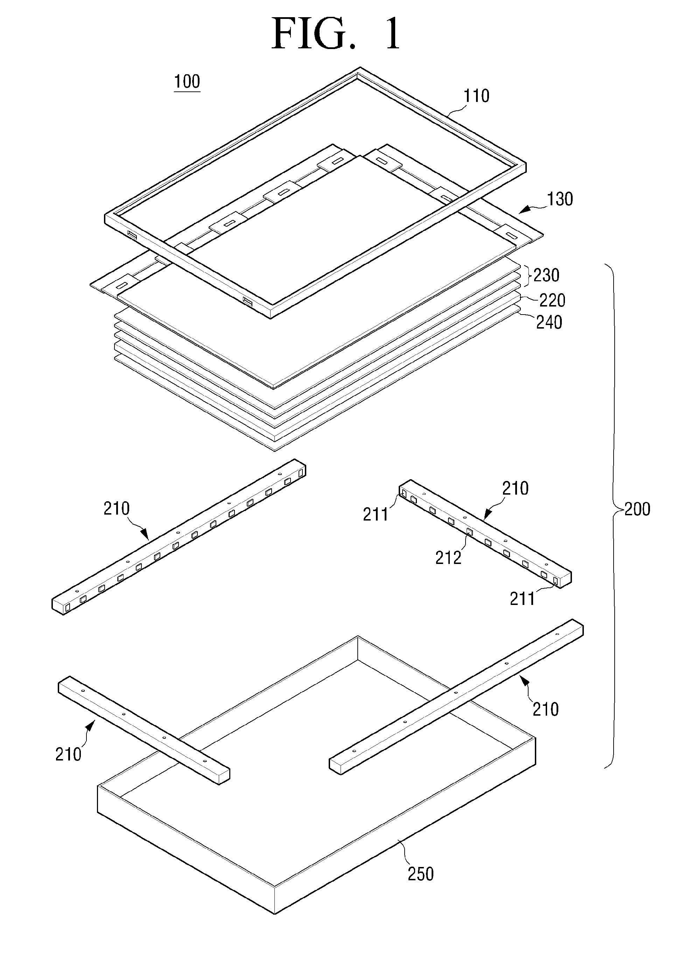

FIG. 1 is an exploded perspective view of a liquid crystal display according to an exemplary embodiment of the present invention.

As shown in FIG. 1, a liquid crystal display 100 comprises a front casing 110, a liquid crystal panel 130, and a backlight unit 200.

The front casing 110 forms the exterior of the liquid crystal display 100 along with a frame 250 of the backlight unit 200 and fixes interior components of the liquid crystal display 100.

The liquid crystal panel 130 displays an image using light supplied from the backlight unit 200. Since the operation and function of the liquid crystal panel 130 is readily understood by a person of ordinary skill in the related art, a detailed description thereof will be omitted.

The backlight unit 200 supplies light to the liquid crystal panel 130 and includes an LED module 210, a light guide plate 220, an optical sheet 230, a reflective sheet 240, and the frame 250.

The LED module 210 is used as a light source for the backlight unit 200 and is disposed around edges of the liquid crystal panel 130.

The light guide plate 220 guides light emitted from LEDs 211 toward the light crystal panel 130. The light guide plate 220 is a flat board having a predetermined thickness and may be formed of transparent acryl, polymethylmethacrylate, plastic or glass.

The optical sheet 230 is disposed on the light guide plate 220 and diffuses and collects light directed to the liquid crystal panel 130. The optical sheet 230 may comprise a diffusing plate (not shown) and a prism sheet (not shown).

The reflective sheet 240 is disposed under the light guide plate 220 and reflects light directed downward from the light guide plate 220 toward the liquid crystal panel 130.

The light guide plate 220, the optical sheet 230, and the reflective sheet 240 can be easily understood by an ordinary skilled person in the related art and thus detailed description thereof will be omitted.

The frame 250 accommodates the components of the backlight unit 200 such as the LED module 210, the light guide plate 220, the optical sheet 230, and the reflective sheet 240.

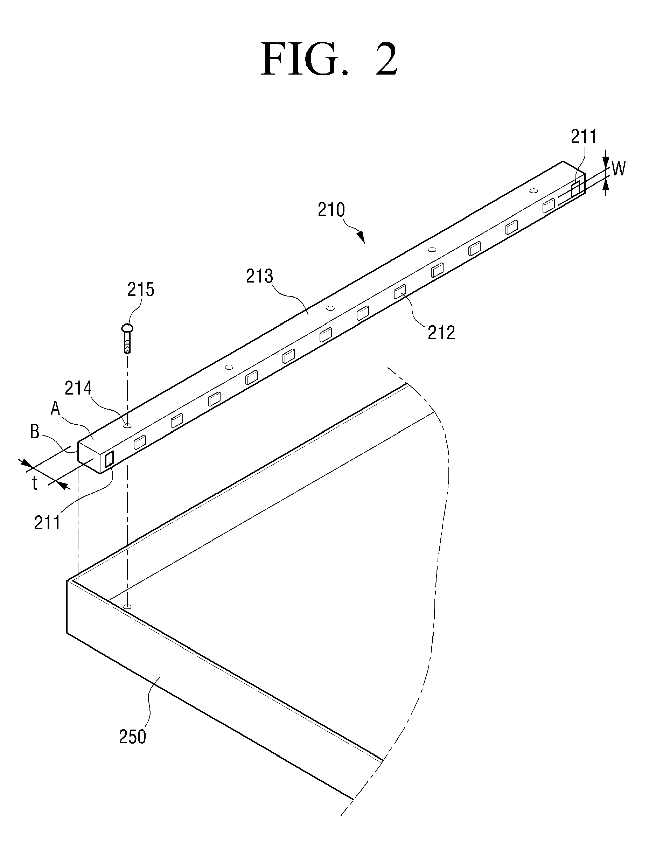

FIG. 2 is an enlarged view of the LED module 210 of FIG. 1. Referring to FIG. 2, the LED module 210 will be described in greater detail.

The LED module 210 comprises a plurality of connectors 211, a plurality of LEDs 211, and a metal substrate 213.

The connectors 211 are disposed on the metal substrate 213, and are connected to a power supply (not shown) to supply power to the LEDs 212.

The LEDs 212 are mounted on one surface of the metal substrate 213 in line. The LEDs 212 are electrically connected to one another through a wire (not shown). If power is supplied to the LEDs 212 through the connectors 211, the LEDs 212 emit light toward the light guide plate 220. As shown in FIGS. 1 and 2, the metal substrate 213 is formed in a bar shape.

The connectors 211 are located at opposite ends of the metal substrate 213. With reference to FIG. 2, the LEDs 212 corresponding to the lower half area are allocated to the connectors 211 located on the downside, and the LEDs 212 corresponding to the upper half area are allocated to the connectors 211 located on the upside. Unlike in FIG. 2, one connector 211 may be located at one end of the metal substrate 213, and the other connector 211 may be located in the middle of the metal substrate 213.

Also, only one connector 211 may be disposed on the metal substrate 213 such that all LEDs 212 mounted on the metal substrate 213 are allocated to the one connector 211. Also, three or more connectors 211 may be disposed on the metal substrate 213. That is, it should be appreciated that the number or location of the connectors 211 may be changed.

As shown in FIGS. 1 and 2, the four metal substrates 213 are disposed on all sides of the frame 250. However, it is not necessary to arrange the metal substrates 213 on all sides of the frame 250. One or three metal substrates 213 may be disposed some of the sides of the frame 250.

If the liquid crystal display 100 is used for a long time, the temperature of the LEDs 212 greatly increases. In order to prevent damage to the LEDs 212, dissipation of the heat generated by the LEDs 212 is required.

According to an exemplary embodiment of the present invention, the metal substrate 213 itself serves as a heat sink to absorb heat generated by the LEDs 212. To this end, the metal substrate 213 has a predetermined thickness (t) which is sufficient to serve as a heat sink and is integrally formed with the LEDs 212. The thickness (t) of the metal substrate 213 may be larger than a width (w) of the LED 212.

Since the heat generated by the LEDs 212 is directly transmitted to the metal substrate 213, no air gap is created and accordingly heat dissipating performance of the LEDs 212 is improved. Also, an extra heat dissipating device is not required.

The heat generated by the LEDs 212 is dissipated by being conducted to the frame 250 or the front casing 110 through the metal substrate 213. In this case, since the metal substrate 213 has the large thickness (t), a contact area between the metal substrate 213 and the frame 250 increases so that a heat resistance is reduced. That is, since the amount of heat conducted from the metal substrate 213 to the frame 250 increases, the heat dissipating performance of the LED 212 is improved. In order to increase the amount of heat conducted from the metal substrate 213 to the frame 250, one surface B (see FIG. 2) of the metal substrate 213 may be disposed in close contact with the side surface of the frame 250 without a gap. That is, one surface B of the metal substrate 213 is in surface-contact with the side surface of the frame 250.

As the thickness of the metal substrate 213 increases, the cost increases and the size of the liquid crystal display 100 increases. Accordingly, there is necessity to adjust the thickness of the metal substrate 213 properly. The thickness of the metal substrate 213 may be about ten or less times larger than the width (w) of the LEDs 212.

The metal substrate 213 comprises a fixing part 214 to be fixed to the frame 250. According to an exemplary embodiment of the present invention, since the fixing part 214 is integrally formed with the metal substrate 213, an extra component for fixing the LED module 210 is not required. Accordingly, the manufacturing process can be simplified.

As shown in FIG. 2, the fixing part 214 may be a through hole, more particularly a screw hole. According to an exemplary embodiment of the present invention, the through hole 214 is provided on a surface A perpendicular to the surface of the metal substrate 213 on which the LEDs 212 are mounted. However, this should not be considered as limiting since the through hole 214 may be provided on other surfaces of the metal substrate 213. For example, the through hole 214 may be provided on a surface B opposite the surface of the metal substrate 213 on which the LEDs 212 are mounted. A screw is inserted into the through hole 214 to fix the LED module 210 to the frame 250. Using the screw to fix the LED module 210 is merely an example and it should be appreciated that other method can be adopted to fix the LED module 210

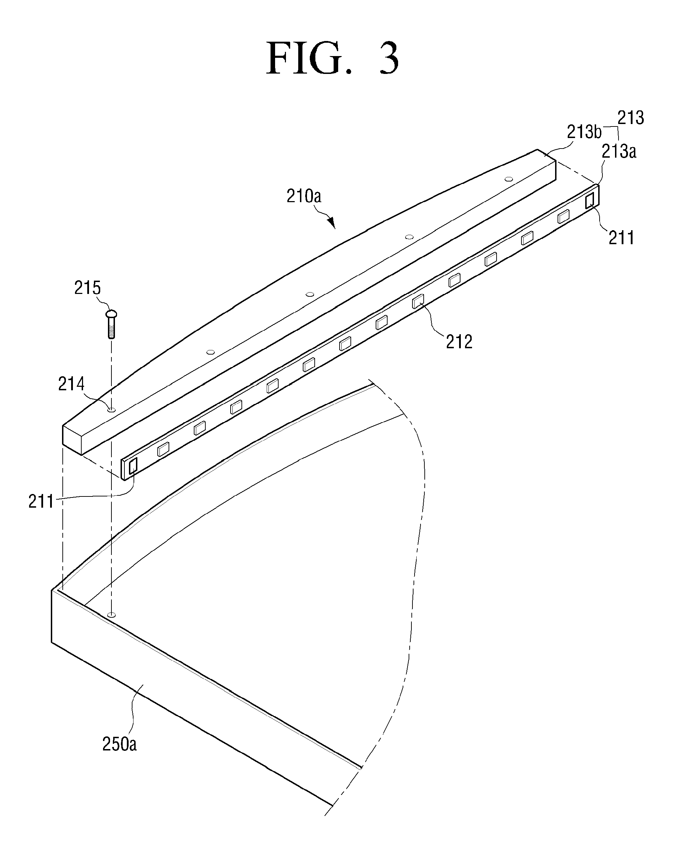

FIG. 3 is a view of an LED module according to another exemplary embodiment of the present invention.

The same reference numerals are used for the same elements as in the aforementioned embodiment.

According to another exemplary embodiment of the present invention, an LED module 210a comprises a plurality of connectors 211, a plurality of LEDs 212, and a metal substrate 213.

This embodiment differs from the aforementioned embodiment in that the metal substrate 213 is divided into a first metal substrate 213a and a second metal substrate 213b, each of which is formed in a bar shape. That is, in the aforementioned embodiment, the first and the second metal substrates 213a, 213b are not separated but are integrally formed with each other.

The LEDs 212 are mounted on the first metal substrate 213a which is has a thin plate shape.

The second metal substrate 213b is connected to the first metal substrate 213b. A fixing part 214 is provided on the second metal substrate 213b. Since the second metal substrate 213b serves as a heat sink to absorb heat generated by the LEDs 212, the second metal substrate 213b has a predetermined thickness which is sufficient to serve as a heat sink.

The side of a frame 250a may have a complicated shape, such as a curved surface rather than a rectangular shape, as shown in FIG. 3. Accordingly, the metal substrate 213 should have a shape corresponding to the frame 250a. In this case, it is difficult to mount the LEDs 212 on the metal substrate having a curved surface during an manufacturing process. In order to solve this problem, another exemplary embodiment of the present invention uses the first metal substrate 213a and the second metal substrate 213b, separately. Since the first metal substrate 213a has a thin plate shape, the LEDs 212 can be easily mounted on the first metal substrate 213a.After the LEDs 212 are mounted on the first metal substrate 213a, the second metal substrate 213b is connected to the first metal substrate 213a. In order to bring one surface of the second metal substrate 213b into close contact with the side surface of the frame 250a, one surface of the second metal substrate 213b should have a shape corresponding to the side surface of the frame 250a.

FIG. 3 merely illustrates an exemplary embodiment, and it should be appreciated that the first and the second metal substrates 213a, 213b may be separated even in the situations where the frame 250 does not have a curved shape as shown in FIG. 1.

In the embodiment of FIG. 3, the first and the second metal substrates 213a, 213b may be connected to each other by soldering. Since the first and the second metal substrates 213a, 213b are connected to each other by soldering, an air gap is not created between the first and the second metal substrates 213a, 213b, thereby improving the heat dissipating performance of the LEDs 212.

Unlike this, the first and the second metal substrates 213a, 213b may be connected to each other by a screw. In this case, a material of high thermal conductivity, such as thermal grease, may be coated between the first and the second metal substrates 213a, 213b.

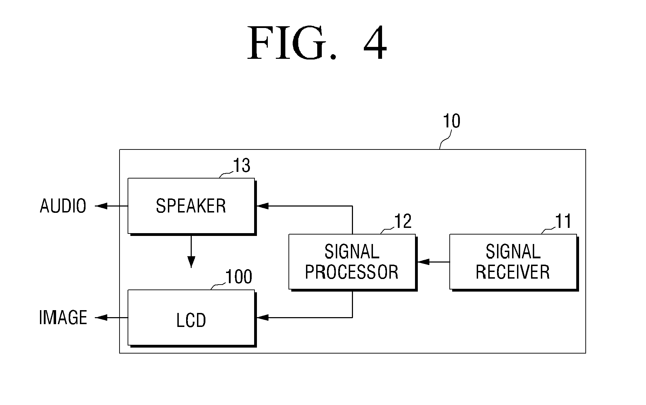

FIG. 4 schematically illustrates a television device 10 according to an exemplary embodiment of the present invention.

The television device 10 of FIG. 4 comprises a signal receiver 11, a signal processor 12, a speaker 13 and an LCD 100.

The signal receiver 11 receives an external signal containing image information or audio information. The external signal may be a broadcast signal output from a broadcast station and an output signal output from a peripheral device such as a digital versatile disk (DVD) player or a personal computer (PC). Accordingly, the signal receiver 11 may comprise an antenna or a tuner which receives a broadcast signal, and a connector which receives an output signal output from a DVD player or PC.

The signal processor 12 processes the external signal received by the signal receiver 11, and generates an image signal for the LCD 100 to display an image and an audio signal for the speaker 13 to output an audio.

The speaker 13 receives the audio signal from the signal processor 12, and outputs an audio.

The LCD 100 receives the image signal from the signal processor 12, and displays an image. The LCD 100 has been described in detail above, so no further description is herein provided. While the television device 10 only has been described with reference to FIG. 4, there is no limitation thereto. Accordingly, exemplary embodiments of the present invention are also applicable to devices other than the television device 10, for example a computer monitor or an electric signboard, or a mobile device.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A backlight unit (200) comprising:
a plurality of light emitting diodes (LEDs) (212) which emit light;
a first metal substrate (213) on which the plurality of LEDs are mounted;
a second metal substrate (213) which is connected to the first metal substrate;
a light guide plate (220) which guides the light emitted from the plurality of LEDs toward a liquid crystal panel (130); and
a frame (250) which accommodates the light guide plate and the first and the second metal substrates,
wherein the first and the second metal substrates (213) are a heat sink that absorbs heat generated by the plurality of LEDs.

2. The backlight unit as claimed in claim 1, wherein each of the first and the second metal substrates is formed in a bar shape,
wherein the first and the second metal substrates have an entire thickness larger than a width of the LEDs,
wherein the heat generated by the LEDs is conducted to the frame through the first and the second metal substrates.

3. The backlight unit as claimed in any of the previous claims,
wherein the first and the second metal substrate (213) are integrally formed with each other.

4. The backlight unit as claimed in any of the previous claims,
wherein the first and the second metal substrates (213a, 213b) are connected to each other by soldering.

5. The backlight unit as claimed in any of the previous claims,
wherein the first and the second metal substrates (213a, 213b) are connected to each other by a screw.

6. The backlight unit as claimed in any of the previous claims,
wherein the second metal substrate comprises a fixing part to be fixed to the frame.

7. The backlight unit as claimed in claim 6, wherein the fixing part is a through hole which is provided on a surface perpendicular to a surface of the first metal substrate on which the LEDs are mounted.

8. The backlight unit as claimed in claim 6, wherein the fixing part is a through hole which is formed on a surface opposite a surface of the first metal substrate on which the LEDs are mounted.

9. The backlight unit as claimed in any of the previous claims,
wherein the second metal substrate is disposed on a side surface of the frame,
wherein the second metal substrate has one surface having a shape corresponding to the side surface of the frame such that one surface of the second metal substrate is in surface contact with the side surface of the frame and the second metal substrate is fixed to the frame.

10. The backlight unit as claimed in any of the previous claims, further comprising at least one connector (211) which is disposed on the first metal substrate to supply power to the plurality of LEDs.

11. The backlight unit as claimed in claim 10, wherein two or more connectors are disposed in the first metal substrate and the plurality of LEDs are allocated to the two or more connectors.

12. A liquid crystal display comprising:
a liquid crystal panel (130) which displays an image; and
a backlight unit (200) which supplies light to the liquid crystal panel, according to any one of claims 1 to 11.

13. A television device, comprising:
a signal receiver (11) adapted to receive an external signal;
a signal processor (12) adapted to process the external signal received by the signal receiver to generate an image signal;
a liquid crystal panel (130) adapted to receive the image signal from the signal processor and displays an image; and
a backlight unit (200) adapted to supply light to the liquid crystal panel, according to any one of claims 1 to 11.
